# EUROPEAN PATENT SPECIFICATION

(11) **EP 1 904 892 B1**
(45) Date of publication and mention of the grant of the patent: **22.12.2010**
(21) Application number: 06760744.0
(22) Date of filing: 12.06.2006
(51) Int. Cl.: G03B 21/00, H04N 9/00

(54) **THREE DIMENSIONAL STEREOSCOPIC PROJECTION ARCHITECTURES**
ARCHITEKTUREN ZUR DREIDIMENSIONALEN STEREOSKOPISCHEN PROJEKTION
ARCHITECTURES DE PROJECTION STEREOSCOPIQUE EN TROIS DIMENSIONS

(30) Priority: 10.06.2005 US 689277 P
(43) Date of publication of application: 02.04.2008
(73) Proprietor: RealD Inc., Beverly Hills, CA 90210 (US)
(72) Inventor: ROBINSON, Michael, G, Beverly Hills CA 90210 (US); CHEN, Jianmin, Boulder, Colorado 80301 (US); SHARP, Gary D., Boulder, Colorado 80301 (US); KORAH, John, Boulder, Colorado 80301 (US)
(74) Representative: Beck, Simon Antony
(86) International application number: PCT/US2006/022898
(87) International publication number: WO 2006/135867

(56) References cited:
- EP-A- 0 837 351
- EP-A- 1 143 744
- WO-A-2004/046787
- US-A1- 2003 214 635
- US-A1- 2005 046 759
- US-A1- 2005 174 543
- US-B2- 6 903 785

## Description

### Technical Field

This invention relates to optical architectures that project polarization-encoded three-dimensional stereoscopic images.

### Background

Three-dimensional displays can be of several forms. Those such as holographic displays form an exact optical representation of three-dimensional objects through phase and amplitude modulation of light. Others recreate three-dimensional information using volume displays such as a series of synchronized modulating two-dimensional screens. Although, these approaches more closely reproduce true three-dimensional images, they are very demanding of hardware and at present can only form very crude images. A more practical approach is to form stereoscopic images in which one image is seen only by the right eye and a second image by the left. The difference between the images yields depth information, thereby providing a strong three-dimensional sensation whereby objects appear to be only a few meters away from a viewer in a cinema environment.

Conventionally, stereoscopic images are viewed through eyewear that discriminates between the eyes. Eyewear can discriminate through colour wherein one eye can be made to see one portion of the visible spectrum while the other eye sees a complementary portion of the spectrum. Encoding the stereoscopic images in the same colour bands can yield a three-dimensional sensation although the obvious difference in what the eyes see causes fatigue. Consequently, other systems and methods of providing three-dimensional images would be useful.

US 2005/0046759 discloses a stereoscopic image projection system comprising four beam splitters, and two spatial light modulators S1 and S2. Light from a light source is directed through a colour wheel 13 into the first polarising beam splitter 14. From here S polarised light is directed towards a second polarising beam splitter 18, which in turn directs the light towards the spatial light modulator S1. Similarly P polarised light is directed towards the imager S2. Light reflected from the imagers S1 and S2 passes back into the respective polarising beam splitters 18 and 16, where it is further directed towards, and recombined in, the fourth polarising beam splitter 20.

W02004/046787 discloses a image projection system using a dichroic beam splitter, and three polarising beam splitters, and three spatial light modulators, each handling a separate colour band in a colour image.

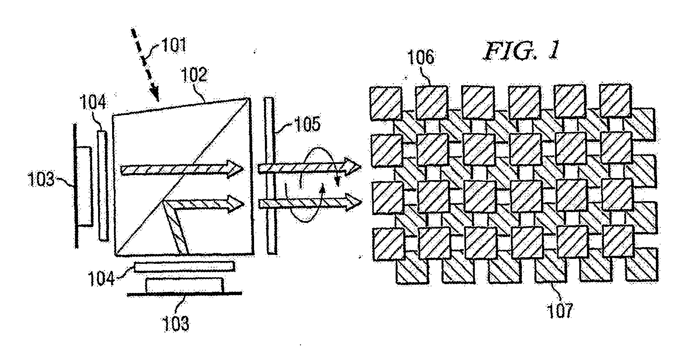

US 2003/0214635 discloses a system which as shown in Figure 1 thereof has dichroic beam splitters and four polarising beam splitters in order to modulate the blue and red components of an image. Furthermore, as shown in Figure 2 thereof it uses another three polarising beam splitters to produce a green image.

EP 1143744 also uses multiple polarising beam splitters to handle different colour components of a spatially light modulated image.

EP 0837351 discloses using three LCD spatial light modulators to modulate red, green and blue images and to recombine them to form a colour image.

### Summary

According to a first aspect of the present invention there is provided a system as defined in independent claim 1, operable to provide stereoscopic images comprising: a light splitting and combining element having an input port, first and second modulation ports, and an output port, the light splitting and combining element being operable to receive unpolarised light through the input port and split the unpolarised light into first and second orthogonal polarisation light components, and where the light splitting and combining element is operable to direct the first and second polarised light components to the first and second modulation ports respectively; a first image projection subsystem comprising a first light modulator and a first retarder element and wherein the first light modulator is disposed proximate to the first modulation port and the first retarder element is disposed between the first light modulator and the first modulation port, the first image projection subsystem is operable to receive the first polarised light component and provide a first stereo image output formed by light having a first output polarisation, and where the polarisations of the first light component and the first output polarisation are substantially orthogonal; a second image projection subsystem comprising a second light modulator and a second retarder element and wherein the second light modulator is disposed proximate to the second modulation port and the second retarder element is disposed between the second light modulator and the second modulation port, the second image projection subsystem is operable to receive the second polarised light component and provide a second stereo image output formed by light having a second output polarisation, and where the second polarisation light component and the second output polarisation are substantially orthogonal; and the first and second output polarisations are substantially orthogonal; wherein: the first light modulator comprises a digital micro-mirror device panel and the first retarder element comprises a 45°-oriented achromatic quarter-wave plate; the second light modulator comprises a digital micro-mirror device panel and the second retarder element comprises a 45°-oriented achromatic quarter-wave plate; and the light splitting and combining element receives the first and second stereo image outputs at the first and second modulation ports, respectively, and is adapted to combine them and to direct the combined image towards a lens via the output port, wherein the light splitting and combining element comprises a single polarizing beam splitter.

According to a second aspect of the present invention there is provided a method of providing stereoscopic visible images, as defined in independent claim 7, comprising the steps of: providing a light splitting and combining element having an input port, first and second modulation ports, and an output port, wherein the light splitting and combining element comprises a single polarizing beam splitter, directing unpolarised light to the input port of the light splitting and combing element; splitting the unpolarised light into first and second illumination lights having first and second input polarisations; directing the first illumination light through the first modulation port of the light splitting and combining element to a first image projection subsystem, the first image projection subsystem comprising a first light modulator disposed proximate to the first modulation port and a 45°-oriented achromatic quarter-wave plate disposed in between the first light modulator and the first modulation port, wherein the first light modulator comprises a digital micro-mirror device panel; directing the second illumination light through the second modulation port of the light splitting and combining element to a second image projection subsystem, the second image projection subsystem comprising a second light modulator disposed proximate to the second modulation port and a 45°-oriented achromatic quarter-wave plate disposed in between the second light modulator and the second modulation port,_wherein the second light modulator comprises a digital micro-mirror device panel; providing, at the first image projection subsystem, a first stereo-image output formed by light having a first output polarization, wherein the first input and output polarizations are substantially orthogonal; providing, at the second image projection subsystem, a second stereo-image output formed by light having a second output polarization, wherein the second input and output polarizations are substantially orthogonal; directing the first and second stereo-image outputs to the first and second modulation ports of the light splitting and combining element, respectively; and projecting, directly or indirectly, the first and second stereo-image outputs onto a display through the output port of the light splitting and combining element and a common lens; wherein the first and second output polarizations are substantially orthogonal.

### Brief Description of the Drawings

For a more complete understanding of embodiments of the invention, and features of the systems and methods herein, reference is now made to the following descriptions taken in conjunction with the accompanying drawing, in which:
FIGURE 1 illustrates a two-panel digital micro-mirror device system as disclosed herein.

### Detailed Description Of The Preferred Embodiments

With any polarization-based discrimination technique, complete two-dimensional images are formed with orthogonal polarization states. Although this can be done by spatially patterning direct-view displays with micro-polarisers, or by time-sequentially altering the output polarization state of a display in synchronization with time-sequential images, one solution is to continuously display two full-colour, high-resolution, orthogonal polarised images. Since this would demand, in general, two displays, it well-suited to projection systems where the image modulator is compact and potentially low cost.

Embodiments of this invention employ micro-display projection systems that produce stereo-images with orthogonal polarization states using a common illumination source and a common projection lens. The term "stereo-images" refers to a pair of images that form slightly different views, usually by a rotational off-set, of a scene on each retina, thereby providing a three-dimensional appearance to the scene. Pairs of images that provide substantially the same view are perceived to lack three- dimensionality and are referred to as non-stereo-images. The common illumination source and common projection lens serves to provide, respectively, colour balance and image registration. Using separate sources for each image can lead to colour balance mismatch, especially as currently used high-brightness sources age. A single projection lens provides for registration of the images before the projection lens, and registration in this approach is therefore maintained for different imaging settings such as the distance and angle to screen and tolerance of zoom.

In situations where the three-dimensional-capable systems described herein are used for displaying two-dimensional images, there is a redundancy of hardware - there being no need in this instance to have separate polarization sub-systems for the handling of the polarization-encoded images. It is however possible to use this extra hardware to improve image resolution. By displaying one image offset by half a pixel in both linear dimensions, and by altering the image content to represent sub-pixel features, higher resolution can be realized. The embodiments described herein are therefore able to deliver higher-resolution two-dimensional images with two lower-resolution projection modulators, together with offering the additional feature of being able to display stereo imagery at the native modulator resolution.

In an exemplary embodiment, two digital micro-mirror device modulators, such as those used by Texas Instruments in its Digital Light Processing(TM) architectures, are used to form the stereoscopic images, but other embodiments may use liquid crystal (LC) or liquid crystal.

The exemplary embodiment provides for colour sharing, using colour-sequential sub-systems operable to provide the colour sharing between first and second channels. An example would be in a digital micro-mirror device system where RGB (Red, Green, Blue) colour frames sequentially illuminate a panel to form a colour image. Generally, in single-panel systems, an amount of light forming the complementary colours is lost. By introducing a system with two kernels, the complementary colour can be used to illuminate the second kernel. To get full-colour imagery from both kernels, and therefore into both stereoscopic images, the primary colours are alternated between sub-systems. Since each image is formed from the summation of primary and complementary colours, the maximum three-dimensional colour gamut is distorted with respect to standard video projection systems and correction and some accompanying light loss may be necessary in those instances.

FIGURE 1 illustrates an exemplary embodiment of a two-panel digital micro-mirror device system. Unpolarised, white illumination light 101 enters an off-45° polarizing beam splitter (PBS) 102, which acts to split the unpolarised, white light 101 into its two orthogonal polarization components. Each illuminates a digital micro-mirror device panel 103 by first passing through a 45°-oriented achromatic quarter-wave plate (QWP) 104 adjacent each panel 103. The purpose of the quarter-wave plates is to alter the polarization state of reflected light from each panel. Modulation between "ON" and "OFF" pixels is achieved in the conventional manner by deflecting light into and away from the capture of the projection lens (not shown). In this way the contrast of the system is determined from scattering and unwanted light collection and not from polarization preservation. Contrasts similar to conventional digital micro-mirror device systems can therefore be expected. Light that is deflected from "ON" pixels is directed toward the projection lens either by transmission through or reflection off the polarization beam splitter. In this way they have substantially orthogonal polarization states.

Introducing an achromatic quarter- wave plate 105 at the exit of the system 100 produces orthogonal, circularly polarised light for each channel. It should be realized, however, that any birefringent component can be introduced at the exit and the orthogonality between the states will be maintained. Matching the external component with identical, orthogonally-oriented plates at each eyepiece will return the channel polarizations to linear to be analyzed by linear polarisers. In this way, crosstalk between channels can be limited in principle to the extent to which the original states are orthogonal.

The extent to which the polarizations are orthogonal is determined by the product of the polarization beam splitter's p-reflection (Rₚ) and the quarter-wave plate leakage. Leakage in this case is determined by the leakage of light between crossed polarisers of two stacked 45°-oriented quarter- wave plates (collectively, a half-wave plate). For good projection polarization beam splitters, Rₚ < 5% and achromatic quarter-wave plate leakage can be less than 2% throughout the visible spectrum. Crosstalk from component performance would therefore be expected to be below 2 x 0.05 x 0.02 = 0.002 or 0.2%.

In the disclosed embodiment, below 1% crosstalk yields a very good three-dimensional display, although the scope of the claims should not be construed to cover only systems with certain crosstalk performance.

In practice, matching the eyewear to the output of the system will be non- ideal and greater crosstalk can be expected. Also, it has been assumed that the digital micro-mirror device panels themselves do not depolarize the light. Since pixels consist essentially of aluminium mirrors, no significant depolarization would be expected, although some contribution derives from edge scattering. What is more likely to deteriorate polarization integrity is the stressed cover glass encapsulating the digital micro-mirror device chip. Stress-induced birefringence can cause serious depolarization and it is expected that the standard digital micro-mirror device component packaging would have to be altered to accommodate polarization preservation.

Colour in this system is formed through colour-sequential illumination. As with conventional digital micro-mirror device systems, this may be done with a colour wheel, since no polarization demands are placed on the illumination. The illumination system would therefore constitute a conventional source such as an ultra high pressure (UHP) mercury lamp focused with an elliptical reflector into a rectangular cross-section light pipe. Before entering the light pipe, the beam would pass through the colour wheel, which through rotation of colour segments is able to break the beam into primary colour sequential illumination frames. Synchronization between the panel modulation and these colour frames allows for full-colour representation. Imaging onto panels via relay optics occurs after exiting the light pipe. Since no polarization conversion is needed, the exiting aperture can be imaged with minimal light loss onto small panels. Exemplary small panels are approximately 1.27 cm (.5 inches) diagonally. Envisioned embodiments may include LED illuminators allowing temporal control of colour by direct modulation, avoiding using a colour wheel.

FIGURE 1 also shows diagrammatically the overlapping pixel patterns 106, 107 which allow higher resolution imagery to be realized. Such overlapping patterns 106, 107 mimics, in a time stationary manner, the so-called "wobbling" technique known in the art to enhance resolution. This method of increasing resolution is in its own right a significant cost advantage since yield rates of smaller chips are significantly higher than those with four times the area making two half resolution chips far less costly than a single chip with full resolution. This approach is particularly advantageous in the embodiments disclosed herein, however, because of the synergies of using the subsystems employed to achieve three-dimensional images to provide higher-resolution two- dimensional images without the need for increased hardware.

In colour-shared systems, a single polarization input state is preferred since colour is the means by which the illumination discriminates between colours at any given instant. For this reason, polarization conversion prior to entering the architecture would increase the overall brightness for most micro-display panels, such as diagonal panels of approximately 1.78 cm (.7 inches).

## Claims

1. A system operable to provide stereoscopic images comprising:
a light splitting and combining element (102) having an input port, first and second modulation ports, and an output port, the light splitting and combining element being operable to receive unpolarised light (101) through the input port and split the unpolarised light into first and second orthogonal polarisation light components, and where the light splitting and combining element is operable to direct the first and second polarised light components to the first and second modulation ports respectively;
a first image projection subsystem comprising a first light modulator (103) and a first retarder element (104) and wherein the first light modulator is disposed proximate to the first modulation port and the first retarder element is disposed between the first light modulator and the first modulation port, the first image projection subsystem is operable to receive the first polarised light component and provide a first stereo image output formed by light having a first output polarisation, and where the polarisations of the first light component and the first output polarisation are substantially orthogonal;
a second image projection subsystem comprising a second light modulator (103) and a second retarder element (104) and wherein the second light modulator is disposed proximate to the second modulation port and the second retarder element is disposed between the second light modulator and the second modulation port, the second image projection subsystem is operable to receive the second polarised light component and provide a second stereo image output formed by light having a second output polarisation, and where the second polarisation light component and the second output polarisation are substantially orthogonal; and the first and second output polarisations are substantially orthogonal; **characterised in that**:
the first light modulator comprises a digital micromirror device panel and the first retarder element comprises a 45°-oriented achromatic quarter-wave plate;
the second light modulator comprises a digital micro-mirror device panel and the second retarder element comprises a 45°-oriented achromatic quarter-wave plate; and
the light splitting and combining element receives the first and second stereo image outputs at the first and second modulation ports, respectively, and is adapted to combine them and to direct the combined image towards a lens via the output port, wherein the light splitting and combining element comprises a single polarizing beam splitter.

2. The system of claim 1, **characterised by** further comprising a quarter wave plate (105) proximate to the output port of the light splitting and combining element.

3. The system of claim 1 or 2, **characterised in that**, in use the first image projection subsystem continuously displays the first image output.

4. The system of claim 3, **characterised in that**, in use, the second image projection subsystem continuously displays the second image output.

5. The system of any of the preceding claims, **characterised by** further comprising a light source proximate to the input port and a colour wheel disposed in between the light source and the input port.

6. A system as claimed in any of the preceding claims **characterised in that** the first and second retarder elements are quarter wave plates and the first and second polarisation light components are linearly polarised.

7. A method of providing stereoscopic visible images, comprising the steps of:
providing a light splitting and combining element (102) having an input port, first and second modulation ports, and an output port, wherein the light splitting and combining element comprises a single polarizing beam splitter,
directing unpolarised light to the input port of the light splitting and combing element;
splitting the unpolarised light into first and second illumination lights having first and second input polarisations;
directing the first illumination light through the first modulation port of the light splitting and combining element to a first image projection subsystem, the first image projection subsystem comprising a first light modulator disposed proximate to the first modulation port and a 45°-oriented achromatic quarter-wave plate disposed in between the first light modulator and the first modulation port, wherein the first light modulator comprises a digital micromirror device panel;
directing the second illumination light through the second modulation port of the light splitting and combining element to a second image projection subsystem, the second image projection subsystem comprising a second light modulator disposed proximate to the second modulation port and a 45°-oriented achromatic quarter-wave plate disposed in between the second light modulator and the second modulation port, wherein the second light modulator comprises a digital micromirror device panel;
providing, at the first image projection subsystem, a first stereo-image output formed by light having a first output polarization, wherein the first input and output polarizations are substantially orthogonal;
providing, at the second image projection subsystem, a second stereo-image output formed by light having a second output polarization, wherein the second input and output polarizations are substantially orthogonal;
directing the first and second stereo-image outputs to the first and second modulation ports of the light splitting and combining element, respectively; and
projecting, directly or indirectly, the first and second stereo-image outputs onto a display through the output port of the light splitting and combining element and a common lens;
wherein the first and second output polarizations are substantially orthogonal.

8. A method as claimed in claim 7, further comprising the steps of: directing the first and second stereo-image outputs from the output port of the light splitting and combining element through a quarter wave plate.

9. A method as claimed in claim 7 or 8, further comprising the step of: continuously providing and projecting the first image output.

10. A method as claimed in claim 9, further comprising the step of: continuously providing and projecting the second image output.

## Patentansprüche

1. Ein bedienbares System zur Bereitstellung von Raumbildern, welches Folgendes umfasst:
ein lichttrennendes und -vereinigendes Element (102) mit einem Eingangskanal, ersten und zweiten Modulationskanal und einem Ausgabekanal, wobei das lichttrennende und -vereinigende Element bedient werden kann, um unpolarisiertes Licht (101) durch den Eingangskanal zu empfangen und das unpolarisierte Licht in erste und zweite orthogonale Polarisationslichtkomponenten aufzuteilen, und wobei das lichttrennende und -vereinigende Element bedient werden kann, um die ersten und zweiten polarisierten Lichtkomponenten jeweils zu den ersten und zweiten Modulationskanälen zu leiten;
Ein erstes Bildprojektions-Teilsystem, bestehend aus einem ersten Lichtmodulator (103) und einem ersten Verzögererelement (104), und wobei der erste Lichtmodulator unmittelbar bei dem ersten Modulationskanal und das erste Verzögererelement zwischen dem ersten Lichtmodulator und dem ersten Modulationskanal angeordnet ist, wobei das erste Bildprojektions-Teilsystem bedienbar ist, um die erste polarisierte Lichtkomponente zu empfangen und um eine erste Stereobildausgabe durch Licht bereitzustellen, die eine erste Ausgabepolarisation hat, und wobei die Polarisationen der ersten Lichtkomponente und der ersten Ausgabepolarisation im Wesentlichen orthogonal sind;
ein zweites Bildprojektions-Teilsystem, bestehend aus einem zweiten Lichtmodulator (103) und einem zweiten Verzögererelement (104), und wobei der zweite Lichtmodulator unmittelbar bei dem zweiten Modulationskanal und das zweite Verzögererelement zwischen dem zweiten Lichtmodulator und dem zweiten Modulationskanal angeordnet ist, wobei das zweite Bildprojektions-Teilsystem bedienbar ist, um die zweite polarisierte Lichtkomponente zu empfangen und eine zweite Stereobildausgabe bereitzustellen, welche durch Licht gebildet wird, die über eine zweite Ausgabepolarisation verfügt und wobei die zweite Polarisationslichtkomponente und die zweite Ausgabepolarisation im Wesentlichen orthogonal sind; und wobei die ersten und zweiten Ausgabepolarisationen im Wesentlichen orthogonal sind; **dadurch gekennzeichnet, dass:**
der erste Lichtmodulator eine digitale Mikrospiegel-Gerätekonsole umfasst, und das erste Verzögererelement eine in 45-Grad-Richtung orientierte achromatische Viertelwellenplatte umfasst;
ein zweiter Lichtmodulator eine digitale Mikrospiegel-Gerätekonsole umfasst, und dass das zweite Verzögererelement eine in 45-Grad-Richtung orientierte achromatische Viertelwellenplatte umfasst; und
das lichttrennende und -vereinigende Element die ersten und zweiten Stereobildausgäben jeweils in den ersten und zweiten Modulationskanälen empfängt und eingerichtet ist, um diese zu vereinigen und das kombinierte Bild durch den Ausgabekanal in Richtung einer Linse leitet, in de das lichttrennende und -vereinigende Element einen einzelnen polarisierenden Strahlenleiter umfasst.

2. Das System nach Anspruch 1, **dadurch gekennzeichnet, dass** es weiterhin eine Viertelwellenplatte (105) unmittelbar bei dem Ausgabekanal des lichttrennenden und - vereinigenden Elements umfasst.

3. Das System nach Anspruch 1 oder 2, **dadurch gekennzeichnet, dass** das erste Bildprojektions-Teilsystem fortlaufend die erste Bildausgabe während des Betriebs anzeigt.

4. Das System nach Anspruch 3, **dadurch gekennzeichnet, dass** das zweite Bildprojektions-Teilsystem fortlaufend die zweite Bildausgabe während des Betriebs anzeigt.

5. Das System nach einem der vorhergehenden Ansprüche, **dadurch gekennzeichnet, dass** es weiterhin über eine Lichtquelle unmittelbar bei dem Eingangskanal sowie auch über ein Lichtrad verfügt, welches zwischen der Lichtquelle und dem Eingangskanal angeordnet ist.

6. Ein System, wie in einem der vorhergehenden Ansprüche beansprucht, **dadurch gekennzeichnet, dass** die ersten und zweiten Verzögererelemente Viertelwellenplatten sind und dass die ersten und zweiten Polarisationslichtkomponenten linear polarisiert sind.

7. Eine Methode zur Bereitstellung von sichtbaren Raumbildern, welche folgende Ablaufschritte umfasst:
Bereitstellung eines lichttrennenden und -vereinigenden Elements (102) mit einem Eingangskanal, ersten und zweiten Modulationskanälen und einem Ausgangskanal, wobei das lichttrennende und -vereinigende Element einen einzelnen polarisierenden Strahlenteiler umfasst,
und unpolarisiertes Licht zu dem Eingangskanl des lichttrennenden und - vereinigenden Elements geleitet wird;
unpolarisiertes Licht in erste und zweite Beleuchtungslichter geteilt wird, welche über erste und zweite Eingangspolarisationen verfügen;
Leitung eines ersten Beleuchtungslichts durch einen ersten Modulationskanal des lichttrennenden und -vereinigenden Elements zu einem ersten Bildprojektions-Teilsystem, wobei in dem ersten Bildprojektions-Teilsystem ein erster Lichtmodulator vorgesehen ist, der unmittelbar bei dem ersten Modulationskanal angeordnet ist und eine in 45-Grad-Richtung orientierte achromatische Viertelwellenplatte zwischen dem ersten Lichtmodulator und dem ersten Modulationskanal angeordnet ist, in dem der erste Lichtmodulator eine digitale Mikrospiegel-Gerätekonsole umfasst;
Leitung eines zweiten Beleuchtungslichts durch einen zweiten Modulationskanal des lichttrennenden und -vereinigenden Elements zu einem zweiten Bildprojektions-Teilsystem, wobei in dem zweiten Bildprojektions-Teilsystem ein zweiter Lichtmodulator vorgesehen ist, welcher unmittelbar neben dem zweiten Modulationskanal angeordnet ist, und eine in 45-Grad-Richtung orientierte achromatische Viertelwellenplatte zwischen dem zweiten Lichtmodulator und dem zweiten Modulationskanal angeordnet ist, in dem der zweite Lichtmodulator über eine digitale Mikrospiegel-Gerätekonsole verfügt;
Bereitstellung einer ersten Stereobildausgabe im ersten Bildprojektions-Teilsystem, welche von Licht gebildet wurde, das eine erste Ausgabepolarisation hat, wobei die ersten Eingabe- und Ausgabepolarisationen im Wesentlichen orthogonal sind;
Bereitstellung einer zweiten Stereobildausgabe im zweiten Bildprojektions-Teilsystem, welche von Licht gebildet wurde, das eine zweite Ausgabepolarisation hat, wobei die zweiten Eingabe- und Ausgabepolarisationen im Wesentlichen orthogonal sind;
Leitung der ersten und zweiten Stereobildausgaben zu jeweils den ersten und zweiten Modulationskanälen des lichttrennenden und -vereinigenden Elements; und
eine direkte oder indirekte Projektierung der ersten und zweiten StereobildAusgaben auf eine Anzeige durch den Ausgabekanal des lichttrennenden und - vereinigenden Elements und einer gemeinsamen Linse;
wobei die ersten und zweiten Ausgabepolarisationen im Wesentlichen orthogonal sind.

8. Eine Vorrichtung wie in Anspruch 7 beansprucht, welche weiterhin folgende Ablaufschritte umfasst:
Leitung der ersten und zweiten Stereobildausgaben von dem Ausgabekanal des lichttrennenden und;
- vereinigenden Elements durch eine Viertelwellenplatte.

9. Eine Vorrichtung, wie in Anspruch 7 oder 8 beansprucht, welche weiterhin den Ablaufschritt einer fortlaufenden Bereitstellung und Projektierung der ersten Bildausgabe umfasst.

10. Eine Vorrichtung, wie in Anspruch 9 beansprucht, welche weiterhin den Ablaufschritt einer fortlaufenden Bereitstellung und Projektierung der zweiten Bildausgabe umfasst.

## Revendications

1. Un système fonctionnant pour fournir des images stéréoscopiques comprenant :
un élément de composition et de décomposition de la lumière (102) disposant d'un port d'entrée, d'un premier et d'un deuxième ports de modulation ainsi que d'un port de sortie ; l'élément de composition et de décomposition de la lumière est actionné pour recevoir la lumière non polarisée (101) à travers le port d'entrée et décompose la lumière non polarisée en des composants de lumière de polarisation orthogonale primaire et secondaire et l'élément de composition et de décomposition de la lumière est actionné afin de diriger respectivement les composants de lumière polarisée primaire et secondaire vers les premier et deuxième ports de modulation ;
un sous-système de projection de la première image comprenant un premier modulateur de lumière (103) et un premier élément retardateur (104) ; le premier modulateur de lumière est disposé à proximité du premier port de modulation et le premier élément retardateur est disposé entre le premier modulateur de lumière et le premier port de modulation ; le sous-système de projection de la première image fonctionne pour recevoir le composant de la lumière polarisée primaire et fournir une première image stéréoscopique de sortie formée par une lumière ayant une polarisation de sortie primaire, et où les polarisations du premier composant de lumière et la polarisation de sortie primaire sont essentiellement orthogonales ;
un sous-système de projection d'une deuxième image comprenant un deuxième modulateur de lumière (103) et un deuxième élément retardateur (104) ; le deuxième modulateur de lumière est disposé à proximité du deuxième port de modulation et le deuxième élément retardateur est disposé entre le deuxième modulateur de lumière et le deuxième port de modulation ; le sous-système de projection de la deuxième image fonctionne pour recevoir le deuxième composant de la lumière polarisée et fournir une sortie d'image stéréoscopique secondaire formée d'une lumière ayant une polarisation de sortie secondaire, et où le deuxième composant de lumière de polarisation et la polarisation de sortie secondaire sont essentiellement orthogonaux ; les polarisations de sortie primaire et secondaire sont essentiellement orthogonales ; **caractérisées par le fait que** :
le premier modulateur de lumière comprend un panneau doté d'un dispositif de micro-miroir numérique et le premier élément retardateur comprend une plaque de quart d'onde achromatique orientée à 45°;
le deuxième modulateur de lumière comprend un panneau doté d'un dispositif de micro-miroir numérique et le deuxième élément retardateur comprend une plaque de quart d'onde achromatique orientée à 45° ;
l'élément de composition et de décomposition de la lumière reçoit les sorties d'image stéréoscopiques primaire et secondaire au niveau respectivement des premier et deuxième ports de modulation et est adapté pour les combiner et diriger l'image composée vers une lentille à travers le port de sortie où l'élément de composition et de décomposition de la lumière comprend un unique diviseur de faisceau polarisant.

2. Le système de la Revendication 1 est en sus **caractérisé par** une plaque de quart d'onde (105) à proximité du port de sortie de l'élément de composition et de décomposition de la lumière.

3. Le système des Revendications 1 ou 2 est **caractérisé par le fait que**, lorsqu'il est utilisé, le sous-système de projection de la première image affiche en continu le résultat de la première image.

4. Le système de la Revendication 3 est **caractérisé par le fait que**, lorsqu'il est utilisé, le sous-système de projection de la deuxième image affiche en continu le résultat de la deuxième image.

5. Le système de toutes les revendications qui précèdent est en sus **caractérisé par** une source de lumière à proximité du port d'entrée et d'un disque de couleurs disposé entre la source de lumière et le port d'entrée.

6. Un système revendiqué dans une des revendications qui précèdent est **caractérisé par le fait que** les premier et deuxième éléments retardateurs sont des plaques de quart d'onde et les composants de lumière de polarisation primaire et secondaire sont linéairement polarisés.

7. Une méthode afin de fournir des images stéréoscopiques visibles, comprenant les étapes suivantes :
fourniture d'un élément de composition et de décomposition de la lumière (102) disposant d'un port d'entrée, d'un premier et d'un deuxième ports de modulation ainsi que d'un port de sortie, où l'élément de composition et de décomposition de la lumière comprend un unique diviseur de faisceau polarisant,
acheminement de la lumière non polarisée vers le port d'entrée de l'élément de composition et de décomposition de la lumière ;
décomposition de la lumière non polarisée en lumières d'illumination primaire et secondaire disposant de polarisations primaire et secondaire ;
acheminement de la lumière d'illumination primaire à travers le premier port de modulation de l'élément de composition et de décomposition de la lumière vers un sous-système de projection de première image comprenant un premier modulateur de lumière disposé à proximité du premier port de modulation et d'une plaque de quart d'onde achromatique orientée à 45° insérée entre le premier modulateur de lumière et le premier port de modulation, où le premier modulateur de lumière comprend un panneau doté d'un dispositif de micro-miroir numérique ;
acheminement de la lumière d'illumination secondaire à travers le deuxième port de modulation de l'élément de composition et de décomposition de la lumière vers un sous-système de projection de deuxième image comprenant un deuxième modulateur de lumière disposé à proximité du deuxième port de modulation et d'une plaque de quart d'onde achromatique orientée à 45° insérée entre le deuxième modulateur de lumière et le deuxième port de modulation, où le deuxième modulateur de lumière comprend un panneau doté d'un dispositif de micro-miroir numérique ;
fourniture au niveau du sous-système de projection de première image, d'une sortie d'image stéréoscopique primaire formée d'une lumière dotée d'une polarisation de sortie primaire, où les polarisations d'entrée et de sortie primaires sont essentiellement orthogonales ;
fourniture au niveau du sous-système de projection de la deuxième image, d'une sortie d'image stéréoscopique secondaire formée d'une lumière dotée d'une polarisation de sortie secondaire, où les polarisations d'entrée et de sortie secondaires sont essentiellement orthogonales ;
acheminement des sorties d'image stéréoscopique primaire et secondaire vers respectivement les premier et deuxième ports de modulation de l'élément de composition et de décomposition de la lumière ; et
projection directe ou indirecte des sorties d'image stéréoscopique primaire et secondaire sous forme d'affichage à travers le port de sortie de l'élément de composition et de décomposition de la lumière et d'une lentille ordinaire ;
où les polarisations primaire et secondaire sont essentiellement orthogonales.

8. Une méthode telle que revendiquée dans la Revendication 7 comprend en sus les étapes suivantes :
acheminement des sorties d'image stéréoscopique primaire et secondaire du port de sortie de l'élément de composition et de décomposition de la lumière à travers une plaque de quart d'onde.

9. Une méthode telle que revendiquée dans la Revendication 7 ou 8 comprenant en sus l'étape consistant à fournir et à projeter en continu la sortie de l'image primaire.

10. Une méthode telle que revendiquée dans la Revendication 9 comprend en sus l'étape consistant à fournir et à projeter en continu la sortie de l'image secondaire.
